Europäisches Patentamt

European Patent Office

Office européen des brevets

(11) Numéro de publication: **0 367 315**
**A1**

## (12) DEMANDE DE BREVET EUROPEEN

(21) Numéro de dépôt: 89202432.4

(22) Date de dépôt: 28.09.89

(51) Int. Cl.5 **H04N 7/00**

(30) Priorité: 04.10.88 FR 8812957

(43) Date de publication de la demande:
09.05.90 Bulletin 90/19

(84) Etats contractants désignés:
DE FR GB

(71) Demandeur: **LA RADIOTECHNIQUE PORTENSEIGNE**
**51, Rue Carnot**
**F-92159 Suresnes(FR)**
(84) **FR**

Demandeur: **N.V. Philips' Gloeilampenfabrieken**
**Groenewoudseweg 1**
**NL-5621 BA Eindhoven(NL)**
(84) **DE GB**

(72) Inventeur: **Hofelt, Maarten Société Civile S.P.I.D.**
**209, rue de l'Université**
**F-75007 Paris(FR)**
Inventeur: **Rakhodai, Issa Société Civile S.P.I.D.**
**209, rue de l'Université**
**F-75007 Paris(FR)**

(74) Mandataire: **Caron, Jean et al**
**SOCIETE CIVILE S.P.I.D. 209, rue de l'Université**
**F-75007 Paris(FR)**

(54) **Système de télévision à débit numérique amélioré.**

(57) Ce système est du type dans lequel une transmission de données numériques est associée à la transmission analogique de la vidéo. Il doit être compatible avec les récepteurs D2-MAC-paquet classiques. Le D2-MAC classique offre un débit numérique de 2050 paquets/s (D-MAC offre le double). Pour augmenter le débit numérique d'un canal D2MAC on peut transmettre des données au rythme 20.25 MHz (rythme D) dans la suppression de trame : on obtient une capacité supplémentaire de 1400 paquets/s. Pour certaines applications, cette capacité est encore insuffisante.

L'invention utilise des paquets "mixtes" comportant une partie au rythme D et une partie au rythme D2, qui sont obtenus en juxtaposant bit à bit deux paquets consécutifs du même service. Le même indice de continuité est imposé aux deux paquets de base. De cette manière les deux en-têtes sont identiques et après juxtaposition tout se passe comme si le paquet D2-D était formé d'un en-tête de 23 bits au rythme D2 avec un contenu au rythme D. Ces paquets peuvent être transmis dans les salves numériques des lignes vidéo, et non plus seulement dans la suppression de trame.

FIG.1

## Système de télévision à débit numérique amélioré

L'invention concerne un système télévision dans lequel une transmission de données numériques est associée à la transmission analogique de l'image, une première vitesse de transmission desdites données étant utilisée durant certains intervalles de temps alors qu'une vitesse plus élevée est utilisée durant d'autres intervalles, les données étant transmises par paquets durant différents intervalles dans les lignes de retour de trame et aussi dans les lignes comportant des données vidéo analogiques, dites ci-après lignes vidéo.

Un tel système est par exemple le système D2MAC-paquet. Le D2MAC classique offre un débit numérique de 2050 paquets/sec (D-MAC offre le double). Or ce débit est très insuffisant pour des applications futures. Il existe actuellement plusieurs propositions pour augmenter le débit numérique d'un canal D2MAC par exemple, en transmettant des données au rythme 20.25 MHz (rythme dit D) pendant la suppression de trame, on obtient une capacité supplémentaire de 1400 paquets/sec. Pour certaines applications, cette capacité est néanmoins encore insuffisante.

Un tel système doit être compatible, c'est-à-dire qu'un récepteur D2-MAC-paquet classique, sans aménagement particulier, doit recevoir correctement une émission réalisée avec ce système (bien entendu sans exploiter les données numériques supplémentaires !)

Le système selon l'invention répond à l'exigence de compatibilité et permet, non seulement d'utiliser la période de suppression de trame, mais aussi d'insérer des paquets au rythme D avec les paquets au rythme dit D2 (10,125 MHz) dans la salve principale c'est-à-dire durant la partie numérique des lignes vidéo. Le nombre de ces paquets au rythme D (qui transportent chacun deux fois plus d'information qu'un paquet au rythme D2) peut varier dans le temps selon le besoin.

A cet effet, le système est muni de moyens pour transmettre des données à la vitesse la plus élevée pendant des intervalles de lignes vidéo en constituant des paquets dits mixtes, munis d'un en-tête dont les bits sont transmis avec la première vitesse (rythme D2), alors que le reste du paquet est constitué de bits transmis avec la vitesse la plus élevée (rythme D).

Cette caractéristique permet d'assurer la compatibilité avec les récepteurs D2MAC classiques.

La constitution de ces paquets mixtes est simplifiée au maximum lorsqu' ils sont faits en combinant bit à bit deux paquets dits paquets-source ayant le même en-tête, un paquet mixte étant constitué par le premier bit du premier paquet-source, puis le premier bit du deuxième paquet-source, puis le second bit du premier paquet-source, et ainsi de suite.

Dans le cas où est réalisée une opération dite entrelacement, qui consiste à transmettre les bits d'un paquet selon un ordre prédéterminé, différent de leur ordre naturel, pour réduire les conséquences des erreurs multiples sur les bits, le paquet mixte est avantageusement entrelacé après sa constitution, en prenant les bits deux par deux.

Ainsi un dispositif d'entrelacement ou de désentrelacement destiné à un système D2MAC peut être utilisé sans modification, pourvu que sa vitesse de transmission des fronts du signal soit suffisante pour ne pas altérer un signal au rythme D.

Enfin dans le cas où est réalisée une opération dite brassage, qui consiste à ajouter (modulo2) une séquence pseudo-aléatoire aux bits d'un paquet à transmettre, pour assurer la dispersion d'énergie d'émission, le brassage s'effectue avantageusement avec la première vitesse (rythme D2)

La description qui va suivre, en regard des dessins annexés décrivant des exemples non limitatifs fera bien com prendre comment l'invention peut être réalisée.

La figure 1 représente schématiquement la constitution d'une ligne vidéo.

La figure 2 représente schématiquement l'organisation dans une trame.

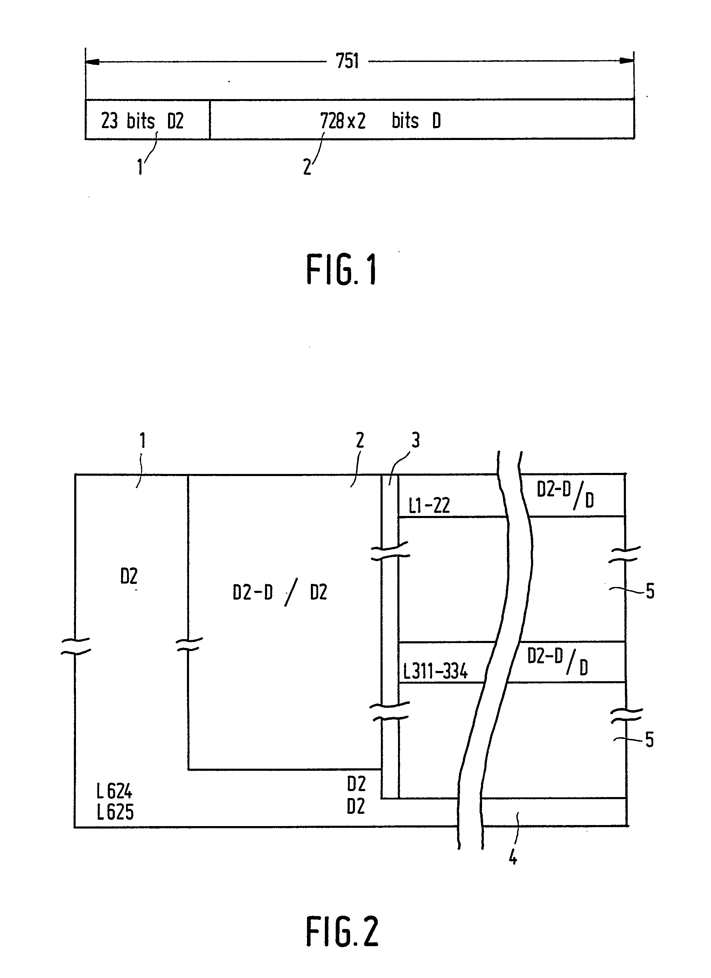

Le paquet de la figure 1 est obtenu en juxtaposant bit à bit deux paquets consécutifs du même service. Les paquets avant juxtaposition sont appelés paquets-source. Une légère modification est apportée aux paquets source : le même indice de continuité est imposé aux deux paquets. De cette manière les deux en-têtes sont identiques.

Chaque paquet source comprend 23 bits d'en-tête suivi de 728 bits de données. Le paquet mixte obtenu à partir de deux paquets-source lus au rythme D (20,25 MHz) comprend un bit de l'en-tête du premier paquet-source puis un bit de même rang de l'en-tête du deuxième paquet-source, ces deux bits au rythme D sont identiques et constituent donc un seul bit au rythme D2. Le reste du paquet mixte est constitué par les bits des deux paquets-sources, un bit de chaque paquet tour à tour, au rythme D. En tout cas, la durée d'un paquet mixte est égale à la durée d'un paquet D2, et prend sa place exacte.

Il est donc inutile de prévoir un changement de rythme d'horloge en cours de ligne car après juxtaposition tout se passe comme si le paquet D2-D était formé d'un en-tête de 23 bits au rythme D2 suivi par un contenu au rythme D. De ce fait l'entête peut être lu par un récepteur D2MAC classique, qui constate après lecture que le paquet ne lui est pas destiné et par conséquent ne cherche pas à traiter les données qui suivent l'en-tête. Par contre, un recepteur adhoc capable de lire au rythme D peut exploiter la suite du paquet.

Comme l'octet de type de paquet est le même pour les deux paquets imbriqués, il serait redondant de le transmettre deux fois. On peut donc modifier le contenu d'un des paquets avant assemblage en y supprimant l'octet de type de paquet. Ceci permet de gagner encore un peu de capacité.

Bien entendu tous les paquets ne sont pas obligatoirement des paquets mixtes. On peut par exemple sacrifier certaines voies de son (mais pas toutes!) au profit d'autres données numériques. Alors les paquets de données de son conservés sont entièrement au rythme D2, alors que certains autres paquets de données sont mixtes.

Selon les standards DMAC et D2MAC, il est prévu un entrelacement des bits d'un paquet, afin de réduire les conséquences des erreurs multiples sur les bits. Les bits de chacun des paquets sont émis en sautant de 94 bits en 94 bits cycliquement, c'est-à-dire comme si le paquet était rebouclé sur lui-même, ce qui donne l'ordre d'émission des bits : 1, 95, 189,...659, 2, 96,...etc.

Dans le cas des paquets mixtes, la fonction d'entrelacement doit être réalisée de manière qu'un décodeur D2MAC puisse reconstituer correctement les en-têtes des paquets, après le désentrelacement, effectué sans distinction sur tous les paquets.

Dans le système selon l'invention l'entrelacement des paquets mixtes est fait de deux manières différentes au choix donnant le même résultat :
- On entrelace un paquet mixte comme un paquet au rythme D2 en considérant que le paquet mixte est constitué de 751 paires de bits indissociables lors de l'entrelacement.
- On entrelace chaque paquet-source séparément et par la suite, on justapose bit à bit, pour former le paquet mixte entrelacé.

Les standards prévoient aussi qu'après l'entrelacement des bits, la dispersion d'énergie est assurée en brassant les salves numériques, avec les exceptions suivantes :
- les 6 premiers bits de chaque salve de données (mot de synchronisation de ligne),
- la salve numérique particulière de la ligne 625 et celle de la ligne 624,
- les composantes de télétexte transmises dans les invervalles de suppression trame.

Dans le système selon l'invention, ces groupes de bits particuliers sont toujours transmis au rythme D2.

Un bloc de 61 677 bits (99x623) est brassé par l'addition (modulo 2) d'une séquence pseudo-aléatoire aux bits à transmettre. La séquence de brassage est fournie par un générateur binaire pseudo-aléatoire. Ce générateur fonctionne de manière continue à la fréquence d'horloge. Il est initialisé toutes les 625 lignes, de manière telle que le premier bit de la séquence soit additionné au bit 7 de la ligne 1. Le dernier bit brassé est le bit 105 de la ligne 623, de la même trame numérique.

Dans le système selon l'invention, la fréquence d'horloge alimentant le générateur pseudo-aléatoire est au rythme D2 (10,125 MHz) même lorsqu'on transmet les parties de données un rythme D des paquets mixtes. Le résultat est que, vu selon le rythme D, ladite séquence pseudo-aléatoire est constituée de paires de deux bits successifs identiques.

La figure 2 reproduit à peu près la figure "structure du multiplex D2 (non à l'échelle)" située page 25 de la norme française "spécification du système D2-MAC/Paquet", édition de septembre 85. Elle représente schématiquement une trame numérique. Les parties 1 et 2 contiennent les salves de données. Les parties 3 et 5 contiennent respectivement le palier "de clamp" et les informations vidéo analogiques. Dans ce qui suit les références à des numéros de période d'horloge se réfèrent toujours à une horloge à 20,25 MHz.

La référence 1 désigne les parties de trame où tout est toujours transmis au rythme D2. Durant les lignes vidéo la partie 1 contient les mots de synchronisation de ligne (périodes d'horloge 2 à 8) qui sont toujours au rythme D2.

Durant la ligne 624 la partie 1 correspond aux périodes d'horloge 2 à 206, et durant la ligne 625, elle correspond à toute la ligne.

La partie 2 contient les paquets numériques qui sont soit entièrement au rythme D2 soit mixtes, avec un en-tête de 23 bits au rythme D2 suivi de 2 x 728 bits au rythme D (pour mémoire, un paquet est réparti sur plusieurs lignes successives).

Cette partie 2 couvre les plages comprises entre la période d'horloge 10 et la période d'horloge 206 incluses, pour toutes les lignes de 1 à 623.

En ce qui concerne le codage et le précodage duobinaire des paquets mixtes, ils doivent se faire, de toutes façons, au rythme D. En revanche, pour des données D2, trois possibilités sont à envisager :

- Précodage/codage unique au rythme D :
Dans ce cas chaque bit au rythme D2 est considéré comme deux bits identiques au rythme D. Cette solution est à éviter, car le signal duobinaire ainsi obtenu aura une valeur moyenne non nulle durant toute la période dans laquelle les données D2 sont transmises. Cela peut avoir des conséquences graves sur la récupération de la composante basse fréquence du signal.

- Précodage/codage duobinaire au rythme D2
Cette solution n'a pas les inconvénients de la précédante mais sa mise en oeuvre est inutilement complexe, car cette solution implique de faire passer les données, selon leurs rythmes, dans deux circuits distincts de précodage/codage. Le passage d'un circuit à l'autre occasione, la plupart du temps, une discontinuité dans le signal duobinaire.

- Précodage unique au rythme adaptatif, codage duobinaire unique au rythme D : le précodage constitue l'élément récursif du circuit Précodage/Codage duobinaire. Le choix d'un précodage unique avec un rythme adaptatif (D ou D2 selon les données) présente deux avantages majeurs : la valeur moyenne du signal duobinaire est nulle partout, et la continuité du signal duobinaire est assurée lors de la transition entre les périodes dans lesquelles des données aux rythmes différents sont transmises.

L'utilisation d'un codage unique au rythme D fait que la mise en oeuvre de cette dernière solution est très simple.

Dans le cas où l'on souhaite réaliser un embrouillage, celui-ci se fait au rythme D2 quelque soit le paquet. Un paquet D2-D est considéré comme un seul paquet à embrouiller, constitué de 751 paires de bits, chaque paire étant indisociable lors de l'embrouillage (seulement la partie utile de paquet est embrouillée, c'est-à-dire 720 paires de bits).

Avec un tel système, on pouvait craindre des difficultés dans certains cas précis ; l'expérience a montré qu'il n'en était rien. Avec par exemple toutes les données présentées au rythme D2, et codées au rythme D, un décodeur D2-MAC typique n'a pas de mal à extraire l'horloge et les données.

Avec la ligne 625 au rythme D2 et toutes les autres au rythme D, un décodeur qui détecte l'horloge en se basant sur les propriétés spectrales du codage duobinaire fournit une synchronisation correcte. Un décodeur basé sur les mots de synchronisation de trame et de ligne a un fonctionnement encore meilleur, dans ce cas.

En intercalant un bit "D2" dans un environnement au rythme D, c'est-à-dire en intercalant, au rythme D, par exemple deux bits à zéro entre deux séquences 0101 et 1010, le diagramme de l'oeil pour le bit "D2" à la sortie du décodeur (qui comporte un filtre passe-bas à $f_o$ = 5MHz) est toujours ouvert et n'est pas affecté de façon sensible par cette configuration défavorable. Par conséquent un récepteur D2-MACpaquet classique est parfaitement capable de détecter un entête au rythme D2 suivant immédiatement les données au rythme D d'un paquet mixte, bien qu'il n'ait pas pu "suivre" ces données au rythme D.

**Revendications**

1. Système de télévision dans lequel une transmission de données numériques est associée à la transmission analogique de l'image, une première vitesse de transmission desdites données étant utilisée durant certains intervalles de temps alors qu'une vitesse plus élevée est utilisée durant d'autres intervalles, les données étant transmises par paquets durant différents intervalles des lignes de retour de trame et aussi des lignes dites vidéo, c'est-à-dire comportant des données vidéo analogiques, caractérisé en ce qu'il est muni de moyens pour transmettre des données à la vitesse la plus élevée pendant des intervalles de lignes vidéo en constituant à cet effet des paquets dits mixtes, munis d'un en-tête dont les bits sont transmis avec la première vitesse, alors que le reste du paquet est constitué de bits transmis avec la vitesse la plus élevée.

2. Système selon la revendication 1, caractérisé en ce qu'il est muni de moyens pour constituer les paquets mixtes en combinant bit à bit deux paquets dits paquets-source ayant le même entête, un paquet mixte étant constitué par le premier bit du premier paquet-source, puis le premier bit du deuxième paquet-source, puis le second bit du premier paquet-source, et ainsi de suite.

3. Système selon la revendication 2, dans lequel est réalisée une opération dite entrelacement, qui consiste à transmettre les bits d'un paquet selon un ordre prédéterminé, différent de leur ordre naturel, pour réduire les conséquences des erreurs multiples sur les bits, caractérisé en ce que le paquet mixte est entrelacé après sa constitution, en prenant les bits deux par deux.

4. Système selon la revendication 2, dans lequel est réalisée une opération dite entrelacement, qui consiste à transmettre les bits d'un paquet selon un ordre prédéterminé, différent de leur ordre naturel, pour réduire les conséquences des erreurs multiples sur les bits, caractérisé en ce que les deux paquets-source sont entrelacés avant de les combiner pour constituer un paquet mixte.

5. Système selon l'une des revendications 3 ou 4, dans lequel est réalisée une opération dite brassage, qui consiste à ajouter(modulo2) une séquence pseudo-aléatoire aux bits d'un paquet à transmettre, pour assurer la dispersion d'énergie d'émission, caractérisé en ce que le brassage s'effectue toujours avec la première vitesse.

6. Système selon l'une quelconque des revendications précédentes, dans lequel sont réalisés un précodage et un codage duobinaire des données numériques, caractérisé en ce qu'on réalise le précodage avec un rythme adaptatif, c'est-à-dire choisi selon les données, puis un codage duobinaire unique au rythme le plus élevé.

FIG.1

FIG.2

Office européen
des brevets

RAPPORT DE RECHERCHE EUROPEENNE

Numero de la demande

EP 89 20 2432

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 201 315 (PHILIPS ELECTRONIC AND ASSOCIATED INDUSTRIES LTD) * Page 1, ligne 1 - page 4, ligne 11; page 7, ligne 5 - page 8, ligne 14; page 8, ligne 33 - page 9, ligne 3 * --- | 1,6 | H 04 N 7/00 |
| A | GB-A-2 160 064 (PHILIPS ELECTRONIC AND ASSOCIATED INDUSTRIES LTD) * Figure 3; colonne 4, lignes 2-9; colonne 4, lignes 24-47 * --- | 1,2 | |
| A | NTZ - NACHRICHTENTECHNISCHE ZEITSCHRIFT, vol. 41, no. 2, février 1988, pages 84-86,88-89, Berlin, DE; R. VOLLMER: "Glasfaserübertragung von MAC-Signalen" * Page 84, colonne de droite, ligne 4 - page 85, ligne 54 * --- | 1,6 | |
| P,X | EP-A-0 296 914 (TELEDIFFUSION DE FRANCE) * Page 2, lignes 30-55; page 3, lignes 37-56; figure 2 * | 1 | DOMAINES TECHNIQUES RECHERCHES (Int. Cl.5) |
| P,A | ----- | 6 | H 04 N |

Le présent rapport a été établi pour toutes les revendications

| Lieu de la recherche | Date d'achèvement de la recherche | Examinateur |
|---|---|---|
| LA HAYE | 14-12-1989 | BOSCH F.M.D. |